(19) Europäisches Patentamt / European Patent Office / Office européen des brevets

(11) **EP 3 936 348 B1**

(12) **EUROPEAN PATENT SPECIFICATION**

(45) Date of publication and mention
of the grant of the patent:
**04.01.2023   Bulletin 2023/01**

(21) Application number: **21183199.5**

(22) Date of filing: **01.07.2021**

(51) International Patent Classification (IPC):
*B60C 1/00* *(2006.01)*        *B60C 11/03* *(2006.01)*
*C08C 19/22* *(2006.01)*        *C08C 19/25* *(2006.01)*
*C08C 19/44* *(2006.01)*        *C08L 15/00* *(2006.01)*
*C08L 9/06* *(2006.01)*          *C08L 45/00* *(2006.01)*
*C08L 91/00* *(2006.01)*

(52) Cooperative Patent Classification (CPC):
(C-Sets available)
**C08C 19/44; B60C 1/0016; B60C 11/1259;
C08C 19/22; C08C 19/25; C08L 15/00;**
B60C 2011/0033                              (Cont.)

(54) **TIRE**

REIFEN

PNEUMATIQUE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority:  **10.07.2020   JP 2020119421**

(43) Date of publication of application:
**12.01.2022   Bulletin 2022/02**

(73) Proprietor: **Sumitomo Rubber Industries, Ltd.
Kobe-shi, Hyogo-ken 651-0072 (JP)**

(72) Inventor: **MIKI, Naoyuki
Kobe-shi 651-0072 (JP)**

(74) Representative: **Manitz Finsterwald
Patent- und Rechtsanwaltspartnerschaft mbB
Martin-Greif-Strasse 1
80336 München (DE)**

(56) References cited:
EP-A1- 3 231 840        FR-A1- 3 090 655
JP-A- 2008 101 127

(52) Cooperative Patent Classification (CPC): (Cont.)

C-Sets
**C08L 9/06, C08L 9/06, C08L 91/00, C08L 45/00,
C08L 45/00, C08L 91/06, C08K 3/04, C08K 5/09,
C08K 3/22, C08K 3/06, C08K 5/18, C08K 5/47;
C08L 15/00, C08L 9/06, C08L 91/00, C08L 45/00,
C08L 45/00, C08L 91/06, C08K 3/04, C08K 5/09,
C08K 3/22, C08K 3/06, C08K 5/18, C08K 5/47;**
C08F 236/06, C08F 212/08

**Description**

TECHNICAL FIELD

The present invention relates to tires.

BACKGROUND ART

Tires with various properties have been desired. For safety reasons, grip performance and handling stability have been emphasized (see, for example, Patent Literature 1).

CITATION LIST

PATENT LITERATURE

Patent Literature 1: JP 2008-101127 A

SUMMARY OF INVENTION

TECHNICAL PROBLEM

The present invention aims to solve the above problem and provide tires which provide improved overall performance in terms of grip performance during high speed driving and handling stability during normal driving.

SOLUTION TO PROBLEM

The present invention relates to tires, including a tread, the tread having a sipe depth of more than 50% of the thickness of the tread, the tread including a rubber composition containing one or more rubber components having a styrene-butadiene rubber content of 50% by mass or higher, one or more hydrogenated dicyclopentadiene resins, and one or more oils.
The tires preferably satisfy the following relationship (1):

```
[the sipe depth (%) based on the thickness of the tread] <
[the amount (parts by mass) of the hydrogenated
dicyclopentadiene resins per 100 parts by mass of the
rubber components] × 6.
```

The tires preferably satisfy the following relationship (2):

```
[the amount (parts by mass) of the oils per 100 parts by
mass of the rubber components] < 3400/[the sipe depth (%)
based on the thickness of the tread].
```

The tires preferably satisfy the following relationship (3):

```
[the amount (parts by mass) of the hydrogenated
dicyclopentadiene resins per 100 parts by mass of the
rubber components] × 3 > [the amount (parts by mass) of the
oils per 100 parts by mass of the rubber components].
```

ADVANTAGEOUS EFFECTS OF INVENTION

The present invention provides tires including a tread which has a sipe depth of more than 50% of the thickness of the tread and which includes a rubber composition containing one or more rubber components having a styrene-butadiene rubber content of 50% by mass or higher, one or more hydrogenated dicyclopentadiene resins, and one or more oils. Such tires provide improved overall performance in terms of grip performance during high speed driving and handling stability during normal driving.

BRIEF DESCRIPTION OF DRAWINGS

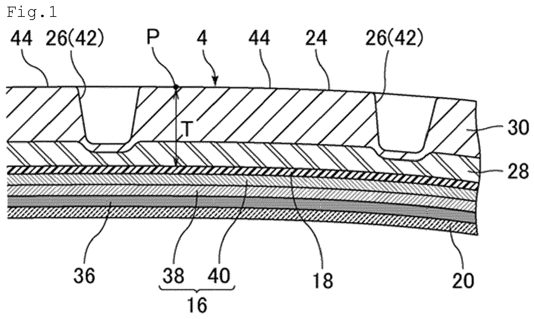

Fig. 1 is an exemplary enlarged cross-sectional view showing a tire tread 4 and the vicinity thereof.

DESCRIPTION OF EMBODIMENTS

The tread in the present invention has a sipe depth of more than 50% of the thickness of the tread and includes a rubber composition of specific formulation containing a styrene-butadiene rubber, a hydrogenated dicyclopentadiene resin, and an oil. Thus, the present invention provides improved overall performance in terms of grip performance during high speed driving and handling stability during normal driving.

The mechanism of the above-mentioned advantageous effect is not clear, but is believed to be as follows.

Hydrogenated dicyclopentadiene resins, which have high steric hindrance and also contain no styrene and no double bonds, have less interaction with styrene-butadiene rubbers and thus are immiscible and incompatible with the rubbers. Hence, the hydrogenated dicyclopentadiene resins in the rubber components are dispersed as islands in a sea of the styrene-butadiene rubbers. Thus, since the hydrogenated dicyclopentadiene resins have little interaction with the styrene-butadiene rubbers, the domain size hardly changes when the tread rubber is stretched. In contrast, oils, which show large interaction with styrene-butadiene rubbers, disperse well in the rubber components, and thus the domain size tends to increase when the tread rubber is stretched. The present invention uses a rubber composition containing such hydrogenated dicyclopentadiene resin and oil as a tread rubber and also uses a sipe depth of more than 50% of the thickness of the tread. Such deep sipes facilitate deformation of the land portions of the tread rubber when a higher load than usual is applied to the tread, e.g., during highway driving. As a result, the tread rubber and accordingly the oil phase are more stretched so that an oil phase having a larger domain size than the hydrogenated dicyclopentadiene resin phase can be formed. Thus, provided are an oil phase having a relatively large domain size, which can conform to large road surface irregularities, and a hydrogenated dicyclopentadiene resin phase having a relatively small domain size, which can conform to small road surface irregularities. Therefore, grip performance is improved during high speed driving or the like. Moreover, the above-described effect is less likely to occur during normal driving where starting and stopping are often repeated, and therefore the handling stability during normal driving will not deteriorate, resulting in good handling stability. Thus, it is believed that due to this mechanism of effect, the overall performance in terms of grip performance during high speed driving and handling stability during normal driving is improved.

Accordingly, the present invention solves the problem (purpose) of improving the overall performance in terms of grip performance during high speed driving and handling stability during normal driving by formulating a tire including a tread which includes a rubber composition containing one or more rubber components having a styrene-butadiene rubber content of 50% by mass or higher, one or more hydrogenated dicyclopentadiene resins, and one or more oils, and which has "a sipe depth of more than 50% of the thickness of the tread". In other words, the parameter: "a sipe depth of more than 50% of the thickness of the tread" does not define the problem (purpose), and the problem herein is to improve the overall performance in terms of grip performance during high speed driving and handling stability during normal driving. In order to provide a solution to this problem, an inventive structure that uses a rubber composition of specific formulation and also satisfies the above parameter has been devised.

The tires include a tread that has a sipe depth of more than 50% of the thickness (100%) of the tread.

The sipe depth of the tread based on the thickness of the tread is preferably 55% or more, more preferably 60% or more, still more preferably 65% or more. Although the upper limit is not limited, it is preferably 98% or less, more preferably 96% or less, still more preferably 95% or less. When the value is within the range indicated above, the overall performance in terms of grip performance during high speed driving and handling stability during normal driving tends to be improved.

Herein, the term "sipe (fine groove)" refers to a slit having a width of 2.0 mm or less formed on a ground contact surface of a tread.

The term "thickness of the tread" refers to the largest of the thicknesses of the tread measured at each point on the tread surface. For example, Fig. 1 is an exemplary enlarged cross-sectional view showing a tire tread 4 and the vicinity thereof. In Fig. 1, the vertical direction corresponds to the radial direction of the tire, the horizontal direction corresponds to the axial direction of the tire, and the direction perpendicular to this paper corresponds to the circumferential direction of the tire.

In Fig. 1, the symbol P denotes a point on a tread surface 24. The point P is located outward from a groove 26 which is located axially innermost. The double-sided arrow T denotes the thickness of the tread 4 measured at the point P. The thickness T is the sum of the thicknesses of a cap layer 30 and a base layer 28 measured at the point P. The thickness T is measured along the normal of the tread surface 24 at the point P. Fig. 1 shows an example of a two-layered tread 4 consisting of a cap layer 30 and a base layer 28; however, in the case of a monolayer tread 4, the thickness T of the tread is the thickness of the monolayer tread measured at the point P, while in the case of a three or more layered tread, the thickness T of the tread is the sum of the thicknesses of the three or more layers measured at the point P, wherein the thickness T at the point P is also measured along the normal of the tread surface 24 at the point P.

The thickness of the tread (the sum of the thicknesses of the cap layer 30 and the base layer 28 in Fig. 1) is preferably 5.0 mm or larger, more preferably 5.5 mm or larger, still more preferably 6.0 mm or larger. The upper limit is preferably 12.0 mm or smaller, more preferably 10.0 mm or smaller, still more preferably 9.0 mm or smaller. When the thickness is within the range indicated above, the overall performance in terms of grip performance during high speed driving and handling stability during normal driving tends to be improved.

(Tread rubber composition)

The tread (cap tread) can be formed from a rubber composition that contains one or more rubber components having a styrene-butadiene rubber (SBR) content of 50% by mass or higher, one or more hydrogenated dicyclopentadiene resins, and one or more oils.

The rubber components include rubbers preferably having a weight average molecular weight (Mw) of 150,000 or more, more preferably 350,000 or more. Although the upper limit of the Mw is not limited, it is preferably 4,000,000 or less, more preferably 3,000,000 or less.

Any SBR may be used, and examples include those commonly used in the tire industry, such as emulsionpolymerized SBR (E-SBR) and solution-polymerized SBR (S-SBR). These may be used alone or in combinations of two or more.

The styrene content of the SBR is preferably 10% by mass or higher, more preferably 15% by mass or higher, still more preferably 20% by mass or higher, particularly preferably 25% by mass or higher, most preferably 30% by mass or higher, further most preferably 35% by mass or higher, but is preferably 65% by mass or lower, more preferably 50% by mass or lower, still more preferably 45% by mass or lower. When the styrene content is within the range indicated above, particularly when the styrene content is increased (to at least a predetermined value), the advantageous effect tends to be more suitably achieved.

The vinyl content of the SBR is preferably 10% by mass or higher, more preferably 15% by mass or higher, but is preferably 70% by mass or lower, more preferably 60% by mass or lower, still more preferably 50% by mass or lower, particularly preferably 45% by mass or lower. When the vinyl content is within the range indicated above, the advantageous effect tends to be more suitably achieved.

The SBR may be either unmodified or modified SBR.

The modified SBR may be any SBR having a functional group interactive with a filler such as silica. Examples include a chain end-modified SBR obtained by modifying at least one chain end of SBR with a compound (modifier) having the functional group (i.e., a chain end-modified SBR terminated with the functional group); a backbone-modified SBR having the functional group in the backbone; a backbone- and chain end-modified SBR having the functional group in both the backbone and chain end (e.g., a backboneand chain end-modified SBR in which the backbone has the functional group and at least one chain end is modified with the modifier); and a chain end-modified SBR that has been modified (coupled) with a polyfunctional compound having two or more epoxy groups in the molecule so that a hydroxy or epoxy group is introduced. These may be used alone or in combinations of two or more.

Examples of the functional group include amino, amide, silyl, alkoxysilyl, isocyanate, imino, imidazole, urea, ether, carbonyl, oxycarbonyl, mercapto, sulfide, disulfide, sulfonyl, sulfinyl, thiocarbonyl, ammonium, imide, hydrazo, azo, diazo, carboxyl, nitrile, pyridyl, alkoxy, hydroxy, oxy, and epoxy groups. These functional groups may have a substituent. Amino groups (preferably amino groups whose hydrogen atom is replaced with a C1-C6 alkyl group), alkoxy groups (preferably C1-C6 alkoxy groups), alkoxysilyl groups (preferably C1-C6 alkoxysilyl groups), and amide groups are preferred among these.

SBR products manufactured or sold by Sumitomo Chemical Co., Ltd., JSR Corporation, Asahi Kasei Corporation, Zeon Corporation, etc. may be used as the SBR.

The amount of the SBR based on 100% by mass of the rubber components in the rubber composition is 50% by mass or more, preferably 70% by mass or more, more preferably 80% by mass or more, still more preferably 90% by mass or more, and may be 100% by mass. Although the upper limit is not limited, it is preferably 90% by mass or less when other rubber components are used. When the amount is within the range indicated above, the advantageous effect tends to be better achieved.

Examples of rubber components that may be used in addition to the SBR include diene rubbers such as isoprene-based rubbers, polybutadiene rubbers (BR), styrene-isoprene-butadiene rubbers (SIBR), acrylonitrile-butadiene rubbers (NBR), chloroprene rubbers (CR), and butyl rubbers (IIR). These rubber components may be used alone or in combinations of two or more. Diene rubbers are preferred among these, with isoprene-based rubbers or BR being more preferred.

Examples of the isoprene-based rubbers include natural rubbers (NR), polyisoprene rubbers (IR), refined NR, modified NR, and modified IR. The NR may be ones commonly used in the tire industry, such as SIR20, RSS#3, or TSR20. Any IR may be used, and examples include those commonly used in the tire industry, such as IR2200. Examples of the refined NR include deproteinized natural rubbers (DPNR) and highly purified natural rubbers (UPNR). Examples of the modified NR include epoxidized natural rubbers (ENR), hydrogenated natural rubbers (HNR), and grafted natural rubbers. Examples of the modified IR include epoxidized polyisoprene rubbers, hydrogenated polyisoprene rubbers, and grafted polyisoprene rubbers. These may be used alone or in combinations of two or more.

The amount of the isoprene-based rubbers, if present, based on 100% by mass of the rubber components in the rubber composition is preferably 10% by mass or more, more preferably 20% by mass or more, but is preferably 50% by mass or less, more preferably 40% by mass or less, still more preferably 35% by mass or less. When the amount is within the range indicated above, the advantageous effect tends to be more suitably achieved.

Any BR may be used, and examples include high-cis BR having high cis content, BR containing syndiotactic polybutadiene crystals, and BR synthesized using rare earth catalysts (rare earth-catalyzed BR). The BR may also be tin-modified polybutadiene rubbers (tin-modified BR) that have been modified with tin compounds. These may be used alone or in combinations of two or more.

The cis content of the BR is preferably 10% by mass or higher, more preferably 25% by mass or higher, still more preferably 35% by mass or higher. Although the cis content may be 100% by mass, it is preferably 98% by mass or lower, more preferably 65% by mass or lower, still more preferably 55% by mass or lower. When the cis content is within the range indicated above, the advantageous effect tends to be more suitably achieved.

The BR may be either unmodified or modified BR. Examples of the modified BR include those into which functional groups as listed for the modified SBR are introduced. Preferred embodiments are as described for the modified SBR.

The BR may be commercially available from Ube Industries, Ltd., JSR Corporation, Asahi Kasei Corporation, Zeon Corporation, etc.

The amount of the BR, if present, based on 100% by mass of the rubber components in the rubber composition is preferably 10% by mass or more, more preferably 20% by mass or more, but is preferably 50% by mass or less, more preferably 40% by mass or less, still more preferably 35% by mass or less. When the amount is within the range indicated above, the advantageous effect tends to be more suitably achieved.

Herein, the weight average molecular weight (Mw) and the number average molecular weight (Mn) can be determined by gel permeation chromatography (GPC) (GPC-8000 series available from Tosoh Corporation, detector: differential refractometer, column: TSKGEL SUPERMULTIPORE HZ-M available from Tosoh Corporation) calibrated with polystyrene standards.

The cis content (cis-1,4-butadiene unit content) and the vinyl content (1,2-butadiene unit content) can be determined by infrared absorption spectrometry. The styrene content can be determined by $^1$H-NMR analysis.

The rubber composition contains one or more hydrogenated dicyclopentadiene resins.

Herein, the term "hydrogenated dicyclopentadiene resins" refers to dicyclopentadiene resins which have been hydrogenated. These may be used alone or in combinations of two or more.

Herein, the term "dicyclopentadiene resins" refers to resins containing dicyclopentadiene as a main monomer component of the backbone (main chain) of the resins. The amount of the unit derived from dicyclopentadiene based on 100% by mass of the resins is 50% by mass or more, preferably 80% by mass or more, more preferably 90% by mass or more, still more preferably 95% by mass or more, particularly preferably 98% by mass or more, most preferably 100% by mass. When the amount is within the range indicated above, the advantageous effect tends to be more suitably achieved.

Examples of the dicyclopentadiene resins include petroleum resins made mainly from dicyclopentadiene produced by dimerization of cyclopentadiene extracted from the C5 fraction of petroleum.

The hydrogenation may be performed by known methods. Exemplary suitable methods include metal-catalyzed catalytic hydrogenation and hydrazine-based hydrogenation (for example, JP S59-161415 A). For example, the metal-catalyzed catalytic hydrogenation may be carried out by adding hydrogen under pressure in an organic solvent in the presence of a metal catalyst. Suitable examples of the organic solvent include tetrahydrofuran, methanol, and ethanol. Each of these organic solvents may be used alone, or two or more of these may be used in admixture. Suitable examples of the metal catalyst include palladium, platinum, rhodium, ruthenium, and nickel. Each of these metal catalysts may be used alone, or two or more of these may be used in admixture. The pressure to be applied is preferably 1 to 300 kgf/cm$^2$, for example.

The degree of hydrogenation (hydrogenation degree) of double bonds of the hydrogenated dicyclopentadiene resins is preferably 20 mol% or higher, more preferably 35 mol% or higher, still more preferably 50 mol% or higher, particularly preferably 65 mol% or higher, most preferably 80 mol% or higher, further most preferably 90 mol% or higher, even most preferably 100 mol%. When the degree of hydrogenation is within the range indicated above, the advantageous effect tends to be more suitably achieved.

Herein, the degree of hydrogenation (hydrogenation degree) can be calculated from the rate of decrease in the double bond signals in the $^1$H-NMR spectrum measured. Herein, the term "degree of hydrogenation (hydrogenation degree)" refers to the degree of hydrogenation of double bonds.

The softening point of the hydrogenated dicyclopentadiene resins is preferably 60 to 200°C. The upper limit is more preferably 160°C or lower, still more preferably 150°C or lower, while the lower limit is more preferably 80°C or higher, still more preferably 100°C or higher. When the softening point is within the range indicated above, the advantageous effect tends to be more suitably achieved.

Herein, the softening point of the resins is determined in accordance with JIS K 6220-1:2001 using a ring and ball softening point measuring apparatus and defined as the temperature at which the ball drops down.

The hydrogenated dicyclopentadiene resins may be commercially available from ENEOS Corporation, Maruzen Petrochemical Co., Ltd., etc.

The amount of the hydrogenated dicyclopentadiene resins per 100 parts by mass of the rubber components in the rubber composition is preferably 5 parts by mass or more, more preferably 10 parts by mass or more, still more preferably 15 parts by mass or more, particularly preferably 20 parts by mass or more. The amount of the hydrogenated dicyclopentadiene resins is preferably 80 parts by mass or less, more preferably 60 parts by mass or less, still more preferably 50 parts by mass or less, particularly preferably 45 parts by mass or less. When the amount is within the range indicated above, the advantageous effect tends to be more suitably achieved.

The rubber composition may contain resins other than the hydrogenated dicyclopentadiene resins.

Any resin other than the hydrogenated dicyclopentadiene resins may be used, and examples include solid styrene resins, alkylphenol resins, coumarone-indene resins, terpene resins, rosin resins, acrylic resins, and unhydrogenated dicyclopentadiene resins. These may be used alone or in combinations of two or more. From the standpoint of the advantageous effect, alkylphenol resins or styrene resins are preferred among these.

Examples of the alkylphenol resins include alkylphenol-aldehyde condensation resins produced by reaction of alkylphenols with aldehydes such as formaldehyde, acetaldehyde, or furfural in the presence of acid or alkali catalysts; alkylphenol-alkyne condensation resins produced by reaction of alkylphenols with alkynes such as acetylene; and modified alkylphenol resins obtained by modification of the foregoing resins with compounds such as cashew nut oil, tall oil, linseed oil, various animal or plant oils, unsaturated fatty acids, rosin, alkylbenzene resins, aniline, or melamine. These may be used alone or in combinations of two or more. Alkylphenol-alkyne condensation resins are preferred among these, with alkylphenol-acetylene condensation resins being particularly preferred.

Examples of the alkylphenols of the alkylphenol resins include cresol, xylenol, t-butylphenol, octylphenol, and nonylphenol. Phenols having branched alkyl groups, such as t-butylphenol, are preferred among these, with t-butylphenol being particularly preferred.

The softening point of the alkylphenol resins is preferably 60 to 200°C. The upper limit is more preferably 160°C or lower, still more preferably 150°C or lower, while the lower limit is more preferably 100°C or higher, still more preferably 130°C or higher. When the softening point is within the range indicated above, the advantageous effect tends to be more suitably achieved.

Herein, the softening point is determined in accordance with JIS K 6220-1:2001 using a ring and ball softening point measuring apparatus and defined as the temperature at which the ball drops down.

The amount of the alkylphenol resins, if present, per 100 parts by mass of the rubber components in the rubber composition is preferably 5 parts by mass or more, more preferably 10 parts by mass or more, still more preferably 15 parts by mass or more. The amount of the alkylphenol resins is preferably 60 parts by mass or less, more preferably 40 parts by mass or less, still more preferably 30 parts by mass or less. When the amount is within the range indicated above, the advantageous effect tends to be more suitably achieved.

The term "styrene resins" refer to polymers formed from styrenic monomers as structural monomers. Examples include polymers produced by polymerization of styrenic monomers as main components (at least 50% by mass, preferably at least 80% by mass). Specific examples include homopolymers produced by polymerization of single styrenic monomers (e.g., styrene, o-methylstyrene, m-methylstyrene, p-methylstyrene, α-methylstyrene, p-methoxystyrene, p-tert-butylstyrene, p-phenylstyrene, o-chlorostyrene, m-chlorostyrene, p-chlorostyrene), copolymers produced by copolymerization of two or more styrenic monomers, and copolymers of styrenic monomers and additional monomers copolymerizable therewith.

Examples of the additional monomers include acrylonitriles such as acrylonitrile and methacrylonitrile; unsaturated carboxylic acids such as acrylic acid and methacrylic acid; unsaturated carboxylic acid esters such as methyl acrylate and methyl methacrylate; dienes such as chloroprene, butadiene, and isoprene; olefins such as 1-butene and 1-pentene; and α,β-unsaturated carboxylic acids and acid anhydrides thereof such as maleic anhydride.

In particular, α-methylstyrene resins (e.g., α-methylstyrene homopolymers, copolymers of α-methylstyrene and styrene) are preferred, and copolymers of α-methylstyrene and styrene are more preferred.

The softening point of the styrene resins is preferably 60 to 200°C. The upper limit is more preferably 160°C or lower, still more preferably 140°C or lower, particularly preferably 120°C or lower, most preferably 100°C or lower, while the lower limit is more preferably 70°C or higher, still more preferably 80°C or higher. When the softening point is within the range indicated above, the advantageous effect tends to be more suitably achieved.

The amount of the styrene resins, if present, per 100 parts by mass of the rubber components in the rubber composition is preferably 5 parts by mass or more, more preferably 10 parts by mass or more, still more preferably 15 parts by mass or more. The amount of the styrene resins is preferably 60 parts by mass or less, more preferably 40 parts by mass or less, still more preferably 30 parts by mass or less. When the amount is within the range indicated above, the advantageous effect tends to be more suitably achieved.

The resins other than the hydrogenated dicyclopentadiene resins may be commercially available from Maruzen Petrochemical Co., Ltd., Sumitomo Bakelite Co., Ltd., Yasuhara Chemical Co., Ltd., Tosoh Corporation, Rutgers Chemicals, BASF, Arizona Chemical, Nitto Chemical Co., Ltd., Nippon Shokubai Co., Ltd., ENEOS Corporation, Arakawa Chemical Industries, Ltd., Taoka Chemical Co., Ltd., etc.

The rubber composition contains one or more oils.

Any oil may be used, and examples include conventional oils, for example: process oils such as paraffinic process oils, aromatic process oils, and naphthenic process oils; low PCA (polycyclic aromatic) process oils such as TDAE and MES; plant oils; and mixtures thereof. These may be used alone or in combinations of two or more. Aromatic process oils are preferred among these. Specific examples of the aromatic process oils include Diana Process Oil AH series available from Idemitsu Kosan Co., Ltd. These oils may be used alone or in combinations of two or more.

The oils may be commercially available from Idemitsu Kosan Co., Ltd., Sankyo Yuka Kogyo K.K., ENEOS Corporation, Olisoy, H&R, Hokoku Corporation, Showa Shell Sekiyu K.K., Fuji Kosan Co., Ltd., etc.

From an environmental standpoint, the polycyclic aromatic content (PCA) of the oils is preferably lower than 3% by mass, more preferably lower than 1% by mass. The polycyclic aromatic content (PCA) is measured in accordance with the Institute of Petroleum (UK) 346/92 method.

The amount of the oils per 100 parts by mass of the rubber components in the rubber composition is preferably 25 parts by mass or more, more preferably 35 parts by mass or more, still more preferably 40 parts by mass or more, particularly preferably 45 parts by mass or more. The amount of the oils is preferably 120 parts by mass or less, more preferably 100 parts by mass or less, still more preferably 80 parts by mass or less, particularly preferably 60 parts by mass or less. When the amount is within the range indicated above, the advantageous effect tends to be more suitably achieved. The amount of the oils includes the amount of the oils contained in the rubbers (oil extended rubbers), if used.

The rubber composition may contain plasticizers (liquid plasticizers that are liquid at 25°C) other than the oils. Examples of the plasticizers other than the oils include liquid polymers (liquid diene polymers) and liquid resins.

The term "liquid polymers (liquid diene polymers)" refers to diene polymers which are liquid at room temperature (25°C).

The number average molecular weight (Mn) of the liquid diene polymers is preferably 1,000 or more, more preferably 3,000 or more, but is preferably 100,000 or less, more preferably 15,000 or less, as determined by gel permeation chromatography (GPC) calibrated with polystyrene standards. When the Mn is within the range indicated above, the advantageous effect tends to be more suitably achieved.

Herein, the Mn of the liquid diene polymers is determined by gel permeation chromatography (GPC) calibrated with polystyrene standards.

Examples of the liquid diene polymers include liquid styrene-butadiene copolymers (liquid SBR), liquid polybutadiene polymers (liquid BR), liquid polyisoprene polymers (liquid IR), and liquid styrene-isoprene copolymers (liquid SIR). These may be used alone or in combinations of two or more. Liquid SBR is preferred among these.

The styrene content of the liquid SBR is preferably 5% by mass or higher, more preferably 10% by mass or higher, still more preferably 15% by mass or higher, particularly preferably 20% by mass or higher, but is preferably 70% by mass or lower, more preferably 60% by mass or lower, still more preferably 50% by mass or lower, particularly preferably 40% by mass or lower, most preferably 30% by mass or lower. When the styrene content is within the range indicated above, the advantageous effect tends to be more suitably achieved.

The vinyl content of the liquid SBR is preferably 2% by mass or higher, more preferably 5% by mass or higher, still more preferably 20% by mass or higher, particularly preferably 40% by mass or higher, most preferably 50% by mass or higher, but is preferably by mass or lower, more preferably 80% by mass or lower, still more preferably 70% by mass or lower. When the vinyl content is within the range indicated above, the advantageous effect tends to be more suitably achieved.

The liquid diene polymers may be commercially available from Sartomer, Kuraray Co., Ltd., etc.

Any liquid resin may be used, and examples include liquid aromatic vinyl polymers, coumarone-indene resins, indene resins, terpene resins, and rosin resins, and hydrogenated products of the foregoing. These may be used alone or in combinations of two or more.

The liquid resins may be commercially available from Maruzen Petrochemical Co., Ltd., Sumitomo Bakelite Co., Ltd., Yasuhara Chemical Co., Ltd., Tosoh Corporation, Rutgers Chemicals, BASF, Arizona Chemical, Nitto Chemical Co., Ltd., Nippon Shokubai Co., Ltd., ENEOS Corporation, Arakawa Chemical Industries, Ltd., Taoka Chemical Co., Ltd., etc.

The amount of the liquid polymer (liquid diene polymer) and/or liquid resin plasticizers (the amount of the liquid polymer (liquid diene polymer) or liquid resin plasticizers, or the combined amount of these plasticizers), if present, per 100 parts by mass of the rubber components in the rubber composition is preferably 5 parts by mass or more, more preferably 10 parts by mass or more, still more preferably 15 parts by mass or more, particularly preferably 20 parts by mass or more. The amount is also preferably 120 parts by mass or less, more preferably 100 parts by mass or less, still more preferably 80 parts by mass or less, particularly preferably 70 parts by mass or less. When the amount is within the range indicated above, the advantageous effect tends to be more suitably achieved.

The rubber composition preferably contains one or more types of carbon black as filler (reinforcing filler).

Examples of the carbon black include N134, N110, N220, N234, N219, N339, N330, N326, N351, N550, and N762. These may be used alone or in combinations of two or more.

The nitrogen adsorption specific surface area ($N_2SA$) of the carbon black is preferably 80 $m^2/g$ or more, more preferably 120 $m^2/g$ or more, still more preferably 130 $m^2/g$ or more. The $N_2SA$ is also preferably 450 $m^2/g$ or less, more preferably 400 $m^2/g$ or less, still more preferably 200 $m^2/g$ or less, particularly preferably 170 $m^2/g$ or less, most preferably 155 $m^2/g$ or less. When the $N_2SA$ is within the range indicated above, the advantageous effect tends to be more suitably achieved.

Herein, the nitrogen adsorption specific surface area of the carbon black can be determined in accordance with JIS K6217-2:2001.

The dibutyl phthalate oil absorption (DBP) of the carbon black is preferably 50 mL/100 g or more, more preferably 100 mL/100 g or more. The DBP is also preferably 200 mL/100 g or less, more preferably 135 mL/100 g or less. When the DBP is within the range indicated above, the advantageous effect tends to be more suitably achieved.

The DBP of the carbon black can be measured in accordance with JIS-K6217-4:2001.

The carbon black may be commercially available from Asahi Carbon Co., Ltd., Cabot Japan K.K., Tokai Carbon Co., Ltd., Mitsubishi Chemical Corporation, Lion Corporation, NSCC Carbon Co., Ltd., Columbia Carbon, etc.

The amount of the carbon black, if present, per 100 parts by mass of the rubber components in the rubber composition is preferably 30 parts by mass or more, more preferably 60 parts by mass or more, still more preferably 80 parts by mass or more, particularly preferably 90 parts by mass or more, most preferably 100 parts by mass or more. The amount is preferably 300 parts by mass or less, more preferably 250 parts by mass or less, still more preferably 200 parts by mass or less, particularly preferably 150 parts by mass or less, most preferably 135 parts by mass or less. When the amount is within the range indicated above, particularly when the amount of the carbon black is increased (to at least a predetermined value), the advantageous effect tends to be more suitably achieved.

The rubber composition may contain one or more types of silica as filler (reinforcing filler).

Any silica may be used, and examples include dry silica (anhydrous silicic acid) and wet silica (hydrous silicic acid). These may be used alone or in combinations of two or more. Wet silica is preferred among these because it has a large number of silanol groups.

The silica may be commercially available from Degussa, Rhodia, Tosoh Silica Corporation, Solvay Japan, Tokuyama Corporation, etc.

The $N_2SA$ of the silica is preferably 50 $m^2/g$ or more, more preferably 150 $m^2/g$ or more. The $N_2SA$ is also preferably 300 $m^2/g$ or less, more preferably 200 $m^2/g$ or less.

The $N_2SA$ of the silica can be measured in accordance with ASTM D3037-81.

The amount of the silica, if present, per 100 parts by mass of the rubber components in the rubber composition is preferably 5 parts by mass or more. The amount is preferably 30 parts by mass or less, more preferably 20 parts by mass or less.

When the rubber composition contains silica, it preferably contains one or more silane coupling agents together with the silica.

Any silane coupling agent may be used, and examples include sulfide silane coupling agents such as bis(3-triethoxysilylpropyl)tetrasulfide, bis(2-triethoxy-silylethyl)tetrasulfide, bis(4-triethoxysilylbutyl)-tetrasulfide, bis(3-trimethoxysilylpropyl)tetrasulfide, bis(2-trimethoxysilylethyl)tetrasulfide, bis(2-triethoxysilylethyl)trisulfide, bis(4-trimethoxysilyl-butyl)trisulfide, bis(3-triethoxysilylpropyl)disulfide, bis(2-triethoxysilylethyl)disulfide, bis(4-triethoxysilyl-butyl)disulfide, bis(3-trimethoxysilylpropyl)disulfide, bis(2-trimethoxysilylethyl)disulfide, bis(4-trimethoxy-silylbutyl)disulfide, 3-trimethoxysilylpropyl-N,N-dimethylthiocarbamoyltetrasulfide, 2-triethoxysilyl-ethyl-N,N-dimethylthiocarbamoyltetrasulfide, and 3-triethoxy-silylpropyl methacrylate monosulfide; mercapto silane coupling agents such as 3-mercaptopropyltrimethoxysilane, 2-mercaptoethyltriethoxysilane, and NXT and NXT-Z both available from Momentive; vinyl silane coupling agents such as vinyltriethoxysilane and vinyltrimethoxysilane; amino silane coupling agents such as 3-aminopropyltriethoxysilane and 3-aminopropyltrimethoxysilane; glycidoxy silane coupling agents such as γ-glycidoxypropyltriethoxysilane and γ-glycidoxypropyltrimethoxysilane; nitro silane coupling agents such as 3-nitropropyltrimethoxysilane and 3-nitropropyltriethoxysilane; and chloro silane coupling agents such as 3-chloropropyltrimethoxysilane and 3-chloropropyltriethoxysilane. These may be used alone or in combinations of two or more.

The silane coupling agents may be commercially available from Degussa, Momentive, Shin-Etsu Silicone, Tokyo Chemical Industry Co., Ltd., AZmax. Co., Dow Corning Toray Co., Ltd., etc.

The amount of the silane coupling agents, if present, per 100 parts by mass of the silica is preferably 0.1 parts by mass or more, more preferably 2 parts by mass or more, still more preferably 3 parts by mass or more. The amount is also preferably 20 parts by mass or less, more preferably 16 parts by mass or less, still more preferably 12 parts by mass or less.

Examples of fillers (reinforcing fillers) other than carbon black and silica which may be used include calcium carbonate, mica such as sericite, magnesium oxide, magnesium hydroxide, clay, talc, and titanium oxide. These may be used alone or in combinations of two or more.

The percentage of the carbon black based on 100% by mass of the fillers (reinforcing fillers) in the rubber composition is preferably 80% by mass or more, more preferably by mass or more, still more preferably 95% by mass or more. The upper limit is not limited and may be 100% by mass. When the percentage is within the range indicated above, the advantageous effect tends to be more suitably achieved.

The rubber composition preferably contains one or more types of sulfur as crosslinking agents (vulcanizing agents).

Examples of the sulfur include those commonly used in the rubber industry, such as powdered sulfur, precipitated sulfur, colloidal sulfur, insoluble sulfur, highly dispersible sulfur, and soluble sulfur. These may be used alone or in combinations of two or more.

The sulfur may be commercially available from Tsurumi Chemical Industry Co., Ltd., Karuizawa sulfur Co., Ltd., Shikoku Chemicals Corporation, Flexsys, Nippon Kanryu Industry Co., Ltd., Hosoi Chemical Industry Co., Ltd., etc.

The amount of the sulfur, if present, per 100 parts by mass of the rubber components in the rubber composition is preferably 0.1 parts by mass or more, more preferably 0.2 parts by mass or more, still more preferably 0.3 parts by mass or more, particularly preferably 0.4 parts by mass or more, but is preferably 5 parts by mass or less, more preferably 3 parts by mass or less, still more preferably 2 parts by mass or less, particularly preferably 1.5 parts by mass or less. When the amount is within the range indicated above, the advantageous effect tends to be better achieved.

The rubber composition preferably contains one or more vulcanization accelerators.

Examples of the vulcanization accelerators include thiazole vulcanization accelerators such as 2-mercaptobenzothiazole and di-2-benzothiazolyl disulfide; thiuram vulcanization accelerators such as tetramethylthiuram disulfide (TMTD), tetrabenzylthiuram disulfide (TBzTD), and tetrakis(2-ethylhexyl)thiuram disulfide (TOT-N); sulfenamide vulcanization accelerators such as N-cyclohexyl-2-benzothiazolylsulfenamide, N-t-butyl-2-benzothiazolylsulfenamide, N-oxyethylene-2-benzothiazole sulfenamide, and N,N'-diisopropyl-2-benzothiazole sulfenamide; and guanidine vulcanization accelerators such as diphenylguanidine, diorthotolylguanidine, and orthotolylbiguanidine. These may be used alone or in combinations of two or more. Sulfenamide and/or thiuram vulcanization accelerators are preferred among these, with combinations of sulfenamide and thiuram vulcanization accelerators being more preferred.

The vulcanization accelerators may be commercially available from Kawaguchi Chemical Industry Co., Ltd., Ouchi Shinko Chemical Industrial Co., Ltd., Rhein Chemie, etc.

The amount of the vulcanization accelerators, if present, per 100 parts by mass of the rubber components in the rubber composition is preferably 1 part by mass or more, more preferably 2 parts by mass or more, still more preferably 3 parts by mass or more, particularly preferably 5 parts by mass or more, but is preferably 20 parts by mass or less, more preferably 15 parts by mass or less, still more preferably 10 parts by mass or less. When the amount is within the range indicated above, the advantageous effect tends to be better achieved.

The rubber composition preferably contains one or more types of stearic acid.

The stearic acid may be conventional ones, e.g., available from NOF Corporation, Kao Corporation, FUJIFILM Wako Pure Chemical Corporation, or Chiba Fatty Acid Co., Ltd.

The amount of the stearic acid, if present, per 100 parts by mass of the rubber components in the rubber composition is preferably 0.5 parts by mass or more, more preferably 1 part by mass or more. The amount is also preferably 5 parts by mass or less, more preferably 3 parts by mass or less, still more preferably 2.5 parts by mass or less. When the amount is within the range indicated above, the advantageous effect tends to be more suitably achieved.

The rubber composition may contain one or more types of zinc oxide.

The zinc oxide may be conventional ones, e.g., available from Mitsui Mining & Smelting Co., Ltd., Toho Zinc Co., Ltd., HakusuiTech Co., Ltd., Seido Chemical Industry Co., Ltd., or Sakai Chemical Industry Co., Ltd.

The amount of the zinc oxide, if present, per 100 parts by mass of the rubber components in the rubber composition is preferably 1 part by mass or more, more preferably 2 parts by mass or more, still more preferably 3 parts by mass or more. The amount is preferably 10 parts by mass or less, more preferably 8 parts by mass or less, still more preferably 7 parts by mass or less. When the amount is within the range indicated above, the advantageous effect tends to be better achieved.

The rubber composition may contain one or more antioxidants.

Examples of the antioxidants include naphthylamine antioxidants such as phenyl-α-naphthylamine; diphenylamine antioxidants such as octylated diphenylamine and 4,4'-bis(α,α'-dimethylbenzyl)diphenylamine; p-phenylenediamine antioxidants such as N-isopropyl-N'-phenyl-p-phenylenediamine, N-(1,3-dimethylbutyl)-N'-phenyl-p-phenylenediamine, and N,N'-di-2-naphthyl-p-phenylenediamine; quinoline antioxidants such as 2,2,4-trimethyl-1,2-dihydroquinoline polymer; monophenolic antioxidants such as 2,6-di-t-butyl-4-methylphenol and styrenated phenol; and bis-, tris-, or polyphenolic antioxidants such as tetrakis[methylene-3-(3',5'-di-t-butyl-4'-hydroxyphenyl)propionate]methane. These may be used alone or in combinations of two or more. Preferred among these are p-phenylenediamine and/or quinoline antioxidants, with combinations of p-phenylenediamine and quinoline antioxidants being more preferred.

The antioxidants may be commercially available from Seiko Chemical Co., Ltd., Sumitomo Chemical Co., Ltd., Ouchi Shinko Chemical Industrial Co., Ltd., Flexsys, etc.

The amount of the antioxidants, if present, per 100 parts by mass of the rubber components in the rubber composition is preferably 0.5 parts by mass or more, more preferably 1 part by mass or more, still more preferably 3 parts by mass or more, but is preferably 10 parts by mass or less, more preferably 8 parts by mass or less. When the amount is within the range indicated above, the advantageous effect tends to be better achieved.

The rubber composition may contain one or more waxes.

Any wax may be used, and examples include petroleum waxes such as paraffin waxes and microcrystalline waxes; naturally-occurring waxes such as plant waxes and animal waxes; and synthetic waxes such as polymers of ethylene, propylene, or other similar monomers. These may be used alone or in combinations of two or more.

The waxes may be commercially available from Ouchi Shinko Chemical Industrial Co., Ltd., Nippon Seiro Co., Ltd., Seiko Chemical Co., Ltd., etc.

The amount of the waxes, if present, per 100 parts by mass of the rubber components in the rubber composition is preferably 0.5 parts by mass or more, more preferably 1 part by mass or more. The amount is also preferably 10 parts by mass or less, more preferably 7 parts by mass or less.

In addition to the above-mentioned components, the rubber composition may contain additives commonly used in the tire industry, such as vulcanizing agents other than sulfur (for example, organic peroxides). The amount of each of such components per 100 parts by mass of the rubber components is preferably 0.1 parts by mass or more, but preferably 200 parts by mass or less.

The rubber composition may be prepared, for example, by kneading the components using a rubber kneading machine such as an open roll mill or a Banbury mixer, and then vulcanizing the kneaded mixture.

The kneading conditions are as follows. In a base kneading step of kneading additives other than crosslinking agents (vulcanizing agents) and vulcanization accelerators, the kneading temperature is usually 100 to 180°C, preferably 120 to 170°C. In a final kneading step of kneading vulcanizing agents and vulcanization accelerators, the kneading temperature is usually 120°C or lower, preferably 80 to 110°C. Moreover, the composition obtained after kneading vulcanizing agents and vulcanization accelerators is usually vulcanized by press vulcanization, for example. The vulcanization temperature is usually 140 to 190°C, preferably 150 to 185°C.

From the standpoint of overall performance in terms of grip performance during high speed driving and handling stability during normal driving, the present tires preferably satisfy the following relationship (1):

```
[the sipe depth (%) based on the thickness of the tread] <
[the amount (parts by mass) of the hydrogenated
dicyclopentadiene resins per 100 parts by mass of the
rubber components] × 6.
```

The mechanism of this advantageous effect is not clear, but is believed to be as follows.

It is considered that the deeper the sipes are, the more the oil phase is stretched during high speed driving, while the hydrogenated dicyclopentadiene resin phase changes little, resulting in a larger difference between the phases. Thus, the stretched oil phase penetrates into the resin phase. Hence, it is considered desirable to increase the amount of the hydrogenated dicyclopentadiene resins as the sipe depth increases. This is believed to improve the overall performance in terms of grip performance during high speed driving and handling stability during normal driving.

The value of "[the amount (parts by mass) of the hydrogenated dicyclopentadiene resins per 100 parts by mass of the rubber components] × 6 - [the sipe depth (%) based on the thickness of the tread]" is preferably 5 or higher, more preferably 15 or higher, still more preferably 20 or higher. The upper limit is preferably 80 or lower, more preferably 60 or lower, still more preferably 55 or lower. When the value is within the range indicated above, the overall performance in terms of grip performance during high speed driving and handling stability during normal driving tends to be improved.

From the standpoint of overall performance in terms of grip performance during high speed driving and handling stability during normal driving, the present tires preferably satisfy the following relationship (2):

```
[the amount (parts by mass) of the oils per 100 parts by
mass of the rubber components] < 3400/[the sipe depth (%)
based on the thickness of the tread].
```

The mechanism of this advantageous effect is not clear, but is believed to be as follows.

It is considered that the deeper the sipes are, the more the oil phase is stretched during high speed driving, while the hydrogenated dicyclopentadiene resin phase changes little, resulting in a larger difference between the phases. Thus, the stretched oil phase penetrates into the resin phase. Hence, it is considered desirable to reduce the amount of the oils as the sipe depth increases. This is believed to improve the overall performance in terms of grip performance during high speed driving and handling stability during normal driving.

The value of "3400/[the sipe depth (%) based on the thickness of the tread] - [the amount (parts by mass) of the oils per 100 parts by mass of the rubber components]" is preferably 0.5 or higher, more preferably 0.8 or higher, still more preferably 1.0 or higher. The upper limit is preferably 10.0 or lower, more preferably 5.0 or lower, still more preferably 3.0 or lower. When the value is within the range indicated above, the overall performance in terms of grip performance during high speed driving and handling stability during normal driving tends to be improved.

From the standpoint of the advantageous effect, the present tires preferably satisfy the following relationship (3) :

```
[the amount (parts by mass) of the hydrogenated
dicyclopentadiene resins per 100 parts by mass of the
rubber components] × 3 > [the amount (parts by mass) of the
oils per 100 parts by mass of the rubber components].
```

The mechanism of this advantageous effect is not clear, but is believed to be as follows.

When it is desired to drive at higher speed, the road to be driven should have a lower proportion of large surface irregularities and a higher proportion of small surface irregularities. Thus, when the tires are to be driven on roads with high speed limits (for example, 200 km/h or higher), it is considered desirable that the amount of the hydrogenated dicyclopentadiene resins be larger than the amount of the oils to increase the proportion of the phase corresponding to small surface irregularities, thereby further improving grip performance during high speed driving. This is believed to improve the overall performance in terms of grip performance during high speed driving and handling stability during normal driving.

The value of "[the amount (parts by mass) of the hydrogenated dicyclopentadiene resins per 100 parts by mass of the rubber components] × 3 - [the amount (parts by mass) of the oils per 100 parts by mass of the rubber components]" is preferably 5.0 or higher, more preferably 8.0 or higher, still more preferably 10.0 or higher. The upper limit is preferably 50.0 or lower, more preferably 30.0 or lower, still more preferably 20.0 or lower. When the value is within the range indicated above, the overall performance in terms of grip performance during high speed driving and handling stability during normal driving tends to be improved.

The tires of the present invention can each be produced from the above-described rubber composition (tread rubber composition) by usual methods. Specifically, an unvulcanized rubber composition containing additives as needed may be extruded into the shape of a tread (cap tread) and then formed and assembled with other tire components in a tire building machine in a usual manner to build an unvulcanized tire, which may then be heated and pressurized in a vulcanizer to produce a tire.

The tread of each tire at least partially or fully includes the above-described rubber composition.

Non-limiting examples of the tires include pneumatic tires, solid tires, and airless tires. Pneumatic tires are preferred among these.

The tires may be suitably used as tires for passenger vehicles, large passenger vehicles, large SUVs, trucks and buses, or two-wheeled vehicles, racing tires, studless winter tires, cold weather tires, all-season tires, runflat tires, aircraft tires, mining tires, or other types of tires.

EXAMPLES

The present invention is specifically described with reference to, but not limited to, examples.
The chemicals used in the examples and comparative examples are listed below.

SBR 1: SBR 1 produced in Production Example 1 described later (non-oil extended, styrene content: 15% by mass, vinyl content: 40% by mass)
SBR 2: SBR 2 produced in Production Example 2 described later (non-oil extended, styrene content: 25% by mass, vinyl content: 60% by mass)
SBR 3: HP755B available from JSR Corporation (S-SBR, oil extended, oil content: 37.5 parts by mass per 100 parts by mass of rubber solids, styrene content: 40% by mass, vinyl content: 39% by mass)
NR: TSR20
Hydrogenated DCPD 1: T-REZ OP501 available from ENEOS Corporation (hydrogenated DCPD resin, degree of hydrogenation: 100 mol%, softening point: 140°C)
Hydrogenated DCPD 2: trial product (hydrogenated DCPD resin, degree of hydrogenation: 60 mol%, softening point: 140°C)
Hydrogenated DCPD 3: trial product (hydrogenated DCPD resin, degree of hydrogenation: 30 mol%, softening point: 140°C)
Alkylphenol resin: Koresin available from BASF (p-t-butylphenol acetylene resin, condensed resin of p-t-butylphenol and acetylene, softening point: 145°C)
Liquid SBR: ricon 100 available from Cray Valley (liquid SBR, styrene content: 22% by mass, vinyl content: 62% by mass, Mn: 4,500)
Oil: aromatic process oil available from H&R (TDAE oil, Vivatec 500)
Carbon black: Seast 9 SAF available from Tokai Carbon Co., Ltd. ($N_2SA$: 142 $m^2$/g, DBP: 115 mL/100 g)
Wax: Ozoace wax available from Nippon Seiro Co., Ltd.
Stearic acid: stearic acid "TSUBAKI" available from NOF Corporation
Antioxidant 1: NOCRAC 6C available from Ouchi Shinko Chemical Industrial Co., Ltd. (N-(1,3-dimethylbutyl)-N'-phenyl-p-phenylenediamine)
Antioxidant 2: NOCRAC 224 available from Ouchi Shinko Chemical Industrial Co., Ltd. (2,2,4-trimethyl-1,2-dihydroquinoline polymer)
Vulcanization accelerator: NOCCELER CZ available from Ouchi Shinko Chemical Industrial Co., Ltd. (N-cyclohexyl-2-benzothiazolylsulfenamide)
Zinc oxide: Zinc oxide #1 available from Mitsui Mining & Smelting Co., Ltd.
Sulfur: HK-200-5 available from Hosoi Chemical Industry Co., Ltd. (5% oil-containing sulfur)

(Production Example 1)

A nitrogen-purged autoclave reactor was charged with cyclohexane, tetrahydrofuran, styrene, and 1,3-butadiene. The temperature of the contents in the reactor was adjusted to 20°C, and then n-butyllithium was added to initiate polymerization. The polymerization was carried out under adiabatic conditions, and the maximum temperature reached 85°C. Once the polymerization conversion ratio reached 99%, butadiene was added, followed by polymerization for five minutes. Subsequently, 3-dimethylaminopropyltrimethoxysilane was added as a modifier, and a reaction was performed for 15 minutes. After completion of the polymerization reaction, 2,6-di-tert-butyl-p-cresol was added. Then, the solvent was removed by steam stripping, and the resulting product was dried on hot rolls adjusted at 110°C to obtain a modified styrene-butadiene rubber (SBR 1).

(Production Example 2)

A nitrogen-purged autoclave reactor was charged with cyclohexane, tetrahydrofuran, styrene, and 1,3-butadiene. The temperature of the contents in the reactor was adjusted to 20°C, and then n-butyllithium was added to initiate polymerization. The polymerization was carried out under adiabatic conditions, and the maximum temperature reached 85°C. Once the polymerization conversion ratio reached 99%, butadiene was added, followed by polymerization for five minutes. Subsequently, 3-dimethylaminopropyltriethoxysilane was added as a modifier, and a reaction was performed for 15 minutes. After completion of the polymerization reaction, 2,6-di-tert-butyl-p-cresol was added. Then, the solvent was removed by steam stripping, and the resulting product was dried on hot rolls adjusted at 110°C to obtain a modified styrene-butadiene rubber (SBR 2).

(Examples and Comparative Examples)

The chemicals other than the sulfur and vulcanization accelerator in the amounts shown in Table 1 were kneaded in a Banbury mixer at 165°C for four minutes to give a kneaded mixture. Then, the kneaded mixture was kneaded with the sulfur and vulcanization accelerator in an open roll mill at 80°C for four minutes to give an unvulcanized rubber composition.

Moreover, the unvulcanized rubber composition was formed into the shape of a tread and assembled with other tire components to build a tire, followed by press vulcanization at 170°C for 15 minutes to prepare a test tire (size: 195/65R15, pneumatic tire for passenger vehicles).

The test tires prepared as above were evaluated as described below. Table 1 shows the results. It should be noted that Comparative Example 2 is used as a standard of comparison in Table 1.

<Grip performance during high speed driving>

The test tires of each formulation example were mounted on a front-engine, front-wheel-drive car of 2,000 cc displacement made in Japan. The distance required for the car to stop after the brakes that lock up were applied at 160 km/h was measured. The results are expressed as an index using the equation below, with the standard comparative example set equal to 100. A higher index indicates better braking performance during high speed driving.

$$\text{(High speed grip performance index)} = \text{(Stopping distance of standard comparative example)}/\text{(Stopping distance of each formulation example)} \times 100$$

<Handling stability during normal driving>

The test tires of each formulation example were mounted on each wheel of a front-engine, front-wheel-drive car of 2,000 cc displacement made in Japan. A driver drove the car on a test course and subjectively evaluated handling stability during zigzag driving. The driver also evaluated handling stability immediately after and 30 minutes after the start of the test. Overall ratings were made relative to the handling stability of the standard comparative example, which was assigned a rating of 100. A higher rating indicates better handling stability during normal driving.

[Table 1]

|  |  | Example | | | | | | | | | | Comparative Example | | | | | | |
|---|---|---|---|---|---|---|---|---|---|---|---|---|---|---|---|---|---|---|
|  |  | 1 | 2 | 3 | 4 | 5 | 6 | 7 | 8 | 9 | 10 | 1 | 2 | 3 | 4 | 5 | 6 | 7 |
| Amount (parts by mass) | SBR 1 (styrene content: 15%) |  |  |  |  | 100 |  |  |  |  |  |  |  |  |  |  |  |  |
| | SBR 2 (styrene content: 25%) |  |  |  |  |  | 100 |  |  |  |  |  |  |  |  |  |  |  |
| | SBR 3 (styrene content: 40%) | 137.5 | 137.5 | 137.5 | 137.5 |  |  | 137.5 | 137.5 | 137.5 | 137.5 | 55 | 137.5 | 55 | 55 | 55 | 55 | 137.5 |
| | NR |  |  |  |  |  |  |  |  |  |  | 60 |  | 60 | 60 | 60 | 60 |  |
| | Hydrogenated DCPD 1 (degree of hydrogenation: 100 mol%) | 15 | 15 | 15 | 20 | 20 | 20 |  |  |  |  |  |  | 15 | 15 | 10 | 20 | 15 |
| | Hydrogenated DCPD 2 (degree of hydrogenation: 60 mol%) |  |  |  |  |  |  | 15 | 20 |  |  |  |  |  |  |  |  |  |
| | Hydrogenated DCPD 3 (degree of hydrogenation: 30 mol%) |  |  |  |  |  |  |  |  | 15 | 20 |  |  |  |  |  |  |  |
| | Alkylphenol resin |  |  |  |  |  |  |  |  |  |  | 15 | 15 |  |  |  |  |  |
| | Liquid SBR | 50 | 50 | 50 | 50 | 50 | 50 | 50 | 50 | 50 | 50 | 50 | 50 | 50 | 50 | 50 | 50 | 50 |
| | Oil | 10 | 10 | 10 | 10 | 47.5 | 47.5 | 10 | 10 | 10 | 10 | 32.5 | 10 | 32.5 | 32.5 | 32.5 | 32.5 | 10 |
| | Carbon black | 125 | 125 | 125 | 125 | 125 | 125 | 125 | 125 | 125 | 125 | 125 | 125 | 125 | 125 | 125 | 125 | 125 |
| | Wax | 1 | 1 | 1 | 1 | 1 | 1 | 1 | 1 | 1 | 1 | 1 | 1 | 1 | 1 | 1 | 1 | 1 |
| | Stearic acid | 2 | 2 | 2 | 2 | 2 | 2 | 2 | 2 | 2 | 2 | 2 | 2 | 2 | 2 | 2 | 2 | 2 |
| | Antioxidant 1 | 2 | 2 | 2 | 2 | 2 | 2 | 2 | 2 | 2 | 2 | 2 | 2 | 2 | 2 | 2 | 2 | 2 |
| | Antioxidant 2 | 2 | 2 | 2 | 2 | 2 | 2 | 2 | 2 | 2 | 2 | 2 | 2 | 2 | 2 | 2 | 2 | 2 |
| | Vulcanization accelerator (CZ) | 5 | 5 | 5 | 5 | 5 | 5 | 5 | 5 | 5 | 5 | 5 | 5 | 5 | 5 | 5 | 5 | 5 |
| | Zinc oxide | 5 | 5 | 5 | 5 | 5 | 5 | 5 | 5 | 5 | 5 | 5 | 5 | 5 | 5 | 5 | 5 | 5 |
| | Sulfur | 0.8 | 0.8 | 0.8 | 0.8 | 0.8 | 0.8 | 0.8 | 0.8 | 0.8 | 0.8 | 0.8 | 0.8 | 0.8 | 0.8 | 0.8 | 0.8 | 0.8 |
| Thickness of tread (mm) | | 6.0 | 6.0 | 6.0 | 6.0 | 6.0 | 6.0 | 6.0 | 6.0 | 6.0 | 6.0 | 6.0 | 6.0 | 6.0 | 6.0 | 6.0 | 6.0 | 6.0 |
| Sipe depth (%) based on thickness of tread | | 95 | 80 | 70 | 70 | 70 | 70 | 70 | 70 | 70 | 70 | 95 | 95 | 95 | 80 | 70 | 80 | 30 |
| (Total) Amount of oils per 100 parts by mass of rubber components | | 47.5 | 47.5 | 47.5 | 47.5 | 47.5 | 47.5 | 47.5 | 47.5 | 47.5 | 47.5 | 47.5 | 47.5 | 47.5 | 47.5 | 47.5 | 47.5 | 47.5 |
| [Amount (parts by mass) of hydrogenated DCPD resins per 100 parts by mass of rubber components] × 6 | | 90 | 90 | 90 | 120 | 120 | 120 | 90 | 120 | 90 | 120 | 0 | 0 | 90 | 90 | 60 | 120 | 90 |
| 3400/[Sipe depth (%) based on thickness of tread] | | 35.8 | 42.5 | 48.6 | 48.6 | 48.6 | 48.6 | 48.6 | 48.6 | 48.6 | 48.6 | 35.8 | 35.8 | 35.8 | 42.5 | 48.6 | 42.5 | 113.3 |
| [Amount (parts by mass) of hydrogenated DCPD resins per 100 parts by mass of rubber components] × 3 | | 45.0 | 45.0 | 45.0 | 60.0 | 60.0 | 60.0 | 45.0 | 60.0 | 45.0 | 60.0 | 0.0 | 0.0 | 45.0 | 45.0 | 30.0 | 60.0 | 45.0 |
| Evaluation | (a) Grip performance during high speed driving | 114 | 121 | 127 | 134 | 117 | 127 | 124 | 129 | 122 | 117 | 73 | 100 | 86 | 93 | 93 | 100 | 96 |
| | (b) Handling stability during normal driving | 95 | 93 | 90 | 87 | 101 | 92 | 90 | 86 | 90 | 95 | 118 | 100 | 109 | 105 | 105 | 100 | 89 |
| | Overall performance (=(a)+(b)) | 209 | 213 | 217 | 222 | 218 | 219 | 214 | 215 | 212 | 212 | 191 | 200 | 195 | 198 | 198 | 200 | 185 |

EP 3 936 348 B1

Table 1 shows that the overall performance in terms of grip performance during high speed driving and handling stability during normal driving (expressed by the sum of the two indexes of grip performance during high speed driving and handling stability during normal driving) was significantly excellent in the tires of the examples having a tread which included a rubber composition of specific formulation containing one or more styrene-butadiene rubbers, one or more hydrogenated dicyclopentadiene resins, and one or more oils and which had a sipe depth of more than 50% of the thickness of the tread.

REFERENCE SIGNS LIST

| | |
|---|---|
| 4: | tread |
| 16: | belt |
| 18: | band |
| 20: | innerliner |
| 24: | tread surface |
| 26: | groove |
| 28: | base layer |
| 30: | cap layer |
| 36: | carcass ply |
| 38: | inner layer |
| 40: | outer layer |
| 42: | main groove |
| 44: | rib |
| P: | point on tread surface 24 |
| T: | thickness of tread 4 |

**Claims**

1. A tire, comprising a tread,

   the tread having a sipe depth of more than 50% of the thickness of the tread,
   the tread comprising a rubber composition containing one or more rubber components having a styrene-butadiene rubber content of 50% by mass or higher, one or more hydrogenated dicyclopentadiene resins, and one or more oils.

2. The tire according to claim 1, which satisfies the following relationship (1):

```
[the sipe depth (%) based on the thickness of the tread] <
[the amount (parts by mass) of the hydrogenated
dicyclopentadiene resins per 100 parts by mass of the
rubber components] × 6.
```

3. The tire according to claim 1 or 2, which satisfies the following relationship (2):

```
[the amount (parts by mass) of the oils per 100 parts by
mass of the rubber components] < 3400/[the sipe depth (%)
based on the thickness of the tread].
```

4. The tire according to any one of claims 1 to 3, which satisfies the following relationship (3):

```
[the amount (parts by mass) of the hydrogenated
dicyclopentadiene resins per 100 parts by mass of the
rubber components] × 3 > [the amount (parts by mass) of the
oils per 100 parts by mass of the rubber components].
```

**Patentansprüche**

1. Reifen, der einen Laufstreifen umfasst,

   wobei der Laufstreifen eine Einschnitt-Tiefe von mehr als 50% der Dicke des Laufstreifens aufweist,
   wobei der Laufstreifen eine Kautschukzusammensetzung umfasst, die eine oder mehrere Kautschukkomponenten mit einem Styrol-Butadien-Kautschuk-Gehalt von 50 Massenprozent oder höher, ein oder mehrere hydrierte Dicyclopentadien-Harze und ein oder mehrere Öle enthält.

2. Reifen nach Anspruch 1, welcher der folgenden Beziehung (1) genügt:

   [Einschnitt-Tiefe (%) bezogen auf die Dicke des Laufstreifens] < [Menge (Massenteile) der hydrierten Dicyclopentadien-Harze pro 100 Massenteile der Kautschukkomponenten] × 6.

3. Reifen nach Anspruch 1 oder 2, welcher der folgenden Beziehung (2) genügt:

   [Menge (Massenteile) der Öle pro 100 Massenteile der Kautschukkomponenten] < 3400 / [Einschnitt-Tiefe (%) bezogen auf die Dicke des Laufstreifens].

4. Reifen nach einem der Ansprüche 1 bis 3, welcher der folgenden Beziehung (3) genügt:

   [Menge (Massenteile) der hydrierten Dicyclopentadien-Harze pro 100 Massenteile der Kautschukkomponenten] × 3 > [Menge (Massenteile) der Öle pro 100 Massenteile der Kautschukkomponenten].

**Revendications**

1. Pneumatique, comprenant une bande de roulement,

   la bande de roulement ayant une profondeur de fente de plus de 50 % de l'épaisseur de la bande de roulement,
   la bande de roulement comprenant une composition de caoutchouc contenant un ou plusieurs composants de caoutchouc ayant une teneur en caoutchouc styrène butadiène de 50 % en masse ou plus, une ou plusieurs résines dicyclopentadiène hydrogénées, et une ou plusieurs huiles.

2. Pneumatique selon la revendication 1, qui satisfait la relation (1) suivante :

   [la profondeur de fente (%) sur la base de l'épaisseur de la bande de roulement] < [la quantité (parts en masse) des résines dicyclopentadiène hydrogénées pour 100 parts en masse des composants de caoutchouc] x 6.

3.  Pneumatique selon la revendication 1 ou 2, qui satisfait la relation (2) suivante :

    [la quantité (parts en masse) des huiles pour 100 parts en masse des composants de caoutchouc] < 3 400 / [la profondeur de fente (%) sur la base de l'épaisseur de la bande de roulement].

4.  Pneumatique selon l'une quelconque des revendications 1 à 3, qui satisfait la relation (3) suivante :

    [la quantité (parts en masse) des résines dicyclopentadiène hydrogénées pour 100 parts en masse des composants de caoutchouc] x 3 > [la quantité (parts en masse) des huiles pour 100 parts en masse des composants de caoutchouc].

Fig.1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2008101127 A
- JP S59161415 A